# EUROPEAN PATENT APPLICATION

(11) **EP 4 697 193 A1**
(43) Date of publication of application: **18.02.2026**
(21) Application number: 25191435.4
(22) Date of filing: 24.07.2025
(51) Int. Cl.: G06F 16/21

(54) **DATABASE SCHEMA MATCHING POWERED BY ARTIFICIAL INTELLIGENCE**

(30) Priority: 16.08.2024 US 202418807763
(71) Applicant: SAP SE, 69190 Walldorf (DE)
(72) Inventor: Dang, Bo, Walldorf (DE); Li, Jingtao, Walldorf (DE); Chen, Guang, Walldorf (DE); Han, Zezhen, Walldorf (DE); Cao, Yang, Walldorf (DE)
(74) Representative: Müller-Boré & Partner Patentanwälte PartG mbB

(57) **Abstract**

A computer-implemented method for improved schema matching of two databases is disclosed. The method can receive a schema of a source table from a first database and a schema of a plurality of target tables from a second database, identify one or more matching tables among the plurality of target tables based on comparison of the schema of the source table and the schema of the plurality of target tables using a large language model, obtain first sample attribute data from the source table and second sample attribute data from a selected matching table, and identify one or more pairs of matching attributes between the source table and the selected matching table based on comparison of the first sample attribute data and the second sample attribute data using the large language model. Related systems and software for implementing the method are also disclosed.

## Description

### BACKGROUND

Schema matching is essential for data management, particularly in the era of big data where vast amounts of information are stored across various databases. Schema matching serves as a bridge, connecting disparate data sources and enabling seamless data integration. The process involves comparing the schemas of different databases to find correspondences or matches between their elements. Despite its importance, schema matching poses several technical challenges. These include dealing with heterogeneous data types, handling inconsistencies in data representation, and managing the complexity of large-scale databases. Furthermore, the dynamic nature of data, which can change over time, adds another layer of complexity to the schema matching process. Thus, room for improvement exists for developing more robust and adaptive schema matching techniques that can effectively handle these challenges.

### BRIEF DESCRIPTION OF THE DRAWINGS

FIG. 1 is an overall block diagram of an example computing system which utilizes artificial intelligence for improved schema matching of two databases.
FIG. 2 is a flow diagram illustrating a two-stage approach for schema matching.
FIG. 3 is an architecture diagram of an example large language model.
FIG. 4 is a flowchart illustrating an example overall method for improved schema matching of two databases in two stages.
FIG. 5 is a block diagram illustrating an example process which can be used in both stages of the schema matching method of FIG. 4.
FIG. 6 is a flowchart illustrating an example method of implementing the first stage of schema matching.
FIG. 7 is a flowchart illustrating an example method of implementing the second stage of schema matching.
FIG. 8 depicts an example structure of a prompt template.
FIG. 9 depicts schema information of an example source table.
FIG. 10 depicts schema information of an example target table.
FIG. 11 depicts schema information of another example target table.
FIG. 12 depicts schema information of another example target table.
FIG. 13 depicts schema information of another example target table.
FIG. 14 depicts schema information of another example target table.
FIG. 15 depicts example sample data extracted from the source table of FIG. 9 and target tables of FIGS. 10-11.
FIG. 16 is a block diagram of an example computing system in which described embodiments can be implemented.
FIG. 17 is a block diagram of an example cloud computing environment that can be used in conjunction with the technologies described herein.

### DETAILED DESCRIPTION

### Overview of Schema Matching

As data continues to grow in volume and complexity, schema matching has become increasingly important in database (DB) management, playing a pivotal role in establishing correspondences between schemas of different databases.

Schema matching ensures efficient alignment of schemas for effective data integration among diverse databases, thereby facilitating data integration (e.g., enabling the combination of data from various sources), migration (e.g., assisting in the smooth transition of data from one database to another), interoperability (e.g., ensuring effective communication between systems with different database structures), and master data management (e.g., providing a unified view of critical data across multiple databases).

Despite its significance, schema matching presents several technical challenges. Traditional schema matching methods often rely solely on syntactic features, such as table and column names, which may overlook nuanced semantic differences. Additionally, exhaustive matching of all possible schema elements can lead to significant computational costs, limiting scalability. Further, the dynamic nature of data, which can change over time, adds another layer of complexity to the schema matching process.

The technologies described herein address the challenges of schema matching by using a two-stage schema matching approach, leveraging the power of generative artificial intelligence (AI). As described more fully below, this approach provides a comprehensive and adaptive solution that combines the strengths of preliminary filtering and advanced data modeling, thereby achieving accurate, efficient, and scalable schema matching for diverse database applications.

### Example Computing Systems for Improved Schema Matching

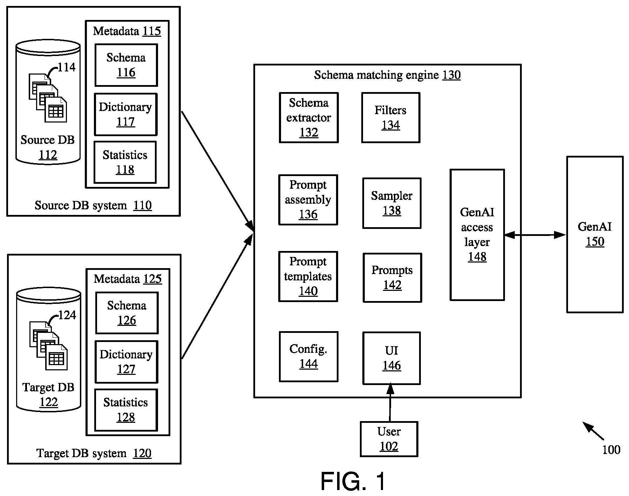

FIG. 1 shows an overall block diagram of an example computing system 100 for improved schema matching of diverse databases.

As an example, FIG. 1 shows two databases that requires schema matching (e.g., for data integration, migration, or other purposes): a source database 112 in a source database system 110 and a target database 122 in a target database system 120. The source database 112 includes a plurality of database tables, also referred to as source tables 114. Likewise, the target database 122 includes a plurality of database tables, also referred to as target tables 124. Each table can include a plurality of attributes or data fields (e.g., arranged in different columns of the table). Schema matching in this context involves assessing the similarity or alignment between each source table 114 and each target table 124, and further assessing the similarity or alignment between source table attributes and target table attributes.

For instance, consider the schema matching between a source table EmployeeInfo (a table which represents basic information about company employees) and a target table WorkerDetails (a table which records detailed information about workers), with the following schema information:

| Table name | EmployeeInfo |
|---|---|
| Attribute information | EmpID (Primary Key, Integer) |
| | First_Name (String) |
| | Lasts_Name (String) |
| | Monthly_Wage (Float) |
| | Department_ID (Integer) |

| Table name | WorkerDetails |
|---|---|
| Attribute information | WorderID (Primary Key, Integer) |
| | Given_Name (String) |
| | Family_Name (String) |
| | Month_Wage (Integer) |
| | Dept_ID (Integer) |
| | Joing_Date (Date) |
| | Residence_Address (String) |

The schema matching may indicate that the source table EmployeeInfo and target table WorkerDetails are similar or matching despite they have different table names and different sets of attributes. The schema matching may also indicate that these two tables have the following pairs of matching attributes despite they may have different attribute names and/or data types: EmpID and WorkerID, First_Name and Given_Name, Last_Name and Family_Name, and Department_ID and Dept_ID.

As shown in FIG. 1, the source database system 110 can include metadata 115 associated with the source database 112. The metadata 115 can include schema information 116 of the source tables 114, one or more dictionaries 117 for the source tables 114, and some statistics 118 of the source tables 114. Similarly, the target database system 120 can include metadata 125 associated with the target database 122. The metadata 125 can include schema information 126 of the target tables 124, one or more dictionaries 127 for the target tables 124, and some statistics 128 of the target tables 124. For simplicity, the metadata 115 or 125 can also be referred to as a "schema" of the source or target tables.

As described herein, the schema information (e.g., 116, 126) defines how data is organized within the corresponding database, such as table names, attribute or column names, attribute data types, relationship between related tables (e.g., primary keys, foreign keys, etc.), attribute uniqueness status, etc. The dictionaries (e.g., 117, 127) include plain text descriptions of tables, attributes, or other textual information, serving as a guide to understanding the data. The statistics (e.g., 118, 128) offer a quantitative description of the data, such as count, mean, median, maximum, minimum, and distribution, which can be used for data analysis and/or query optimization.

As described herein, the schema matching can be performed by a schema matching engine 130, utilizing a generative AI model 150 (or "GenAI"). The schema matching engine 130 can include a generative AI access layer 148, which can be configured to interface with a variety of generative AI models (e.g., via different application programming interfaces), such as a large language model (LLM) described more fully below. In some examples, the generative AI model 150 can be hosted externally (e.g., on a third-party platform) or deployed locally on the computing system 100.

A user 102 can interact with the schema matching engine 130 via a user interface 146 (or "UI"). In some examples, through the user interface 146, the user 102 can enter task context which can be incorporated into prompts that are sent to the generative AI model 150 for schema matching, as described further below. In some examples, through the user interface 146, the user 102 can manually select which tables proceed for schema matching, e.g., manually removing some target tables 124 from attribute-level matching, as described further below.

Through the user interface 146, the user 102 can set up configurations 144 of the schema matching engine 130. In some examples, the configurations 144 can include the connection information for both the source database system 110 and the target database system 120, thus allowing the schema matching engine 130 to automatically retrieve relevant information (e.g., metadata 115, 125, etc.) about the source tables 114 and target tables 124. In some examples, the configurations 144 can include specific settings for the generative AI access layer 148 such as connection information for the generative AI model 150, operational parameters of the generative AI model 150 (e.g., maximum number of tokens, model temperature, frequency penalty, presence penalty, etc.). In some examples, the user 102 can specify in the configurations 144 one or more criteria and/or parameters for filtering metadata and/or sample data before sending them to the generative AI model 150. In some examples, the user 102 can specify a similarity metric in the configurations 144 which is used to measure similarity between tables and/or attributes. In some examples, the user 102 can set a threshold value in the configurations 144, which can be used to determine whether two tables or two attributes are similar based on the similarity measurement. In some examples, the user 102 can specify a sampling method in the configurations 144, which can be used to determine how attribute data is selected for attribute-level matching, as described more fully below. Other types of configurations (e.g., output format, etc.) can also be set up by the user 102.

As described more fully below, the schema matching engine 130 can perform schema matching of the source database 112 and the target database 122 in two stages. In the first stage (also referred to as table-level matching), for each source table 114 in the source database 112, the schema matching engine 130 can be configured to identify one or more matching tables among the plurality of target tables 124 in the target database 122. In the second stage (also referred to as attribute-level matching), for a selected matching table, the schema matching engine 130 can be configured to find matching attributes between the source table and the selected matching table.

As shown in FIG. 1, the schema matching engine 130 can include a schema extractor 132, one or more filters 134, a prompt assembly proxy 136, and a sampler 138.

The schema extractor 132 can be used in the first stage (table-level) of schema matching, which involves automatic and runtime retrieval of metadata (e.g., 115, 125) of source tables and target tables such as schema information (e.g., 116, 126), text descriptions from dictionaries (e.g., 117, 127), and statistics (e.g., 118, 128).

The sampler 138 can be used in the second stage (attribute-level) of schema matching, where it can automatically sample attribute data from source tables and selected target tables (e.g., matching tables).

The filters 134 can be used to filter out sensitive or irrelevant data (e.g., in both the first and second stages) to ensure the quality and security of the schema matching process.

In both the first and second stages, the prompt assembly proxy 136 can be configured to dynamically generate, in runtime, respective prompts 142 by inserting extracted data (e.g., metadata or sampled attribute data) into corresponding prompt templates 140. As described herein, a prompt template is a predefined text structure with parameters or placeholders that can be replaced with different values, guiding a generative AI model to generate specific types of responses or content. The generated prompts 142 include detailed instructions (and may also include examples) for the generative AI model 150 to measure similarities between tables (for table-level matching) or between attributes (for attribute-level matching). The generated prompts 142 can then be sent to the generative AI model 150 (e.g., via the generative AI access layer 148) for schema matching.

The response generated by the generative AI model 150 includes results of schema matching (in both stages), which can be passed to the schema matching engine 130 via the generative AI access layer 148, and presented to the user 102 on the user interface 146. The results of schema matching can then be used in a variety of applications, such as data integration, migration, interoperability, master data management, or the like.

In practice, the systems shown herein, such as the computing system 100, can vary in complexity, with additional functionality, more complex components, and the like. For example, there can be additional functionality within the schema matching engine 130. Additional components can be included to implement security, redundancy, load balancing, report design, data logging, and the like.

The described computing systems can be networked via wired or wireless network connections, including the Internet. Alternatively, systems can be connected through an intranet connection (e.g., in a corporate environment, government environment, or the like).

The computing system 100 and any of the other systems described herein can be implemented in conjunction with any of the hardware components described herein, such as the computing systems described below (e.g., processing units, memory, and the like). In any of the examples herein, metadata, prompt templates, prompts, sample attribute data, and the like can be stored in one or more computer-readable storage media or computer-readable storage devices. The technologies described herein can be generic to the specifics of operating systems or hardware and can be applied in any variety of environments to take advantage of the described features.

### Example Two-Stage Schema Matching Framework

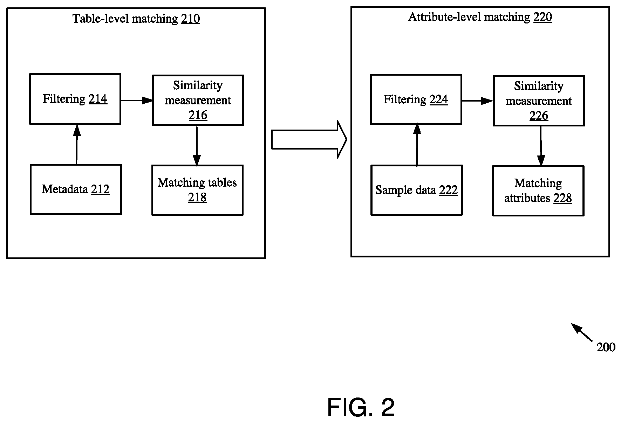

FIG. 2 is a flow diagram illustrating the two-stage schema matching framework 200 disclosed herein.

The framework 200 begins with the first or table-level matching stage 210. In this stage, for each source table in a source database, one or more matching tables 218 among a plurality of target tables in a target database can be identified based on comparison of metadata 212 (e.g., schema information) of the source and target tables. This stage can significantly reduce the number of potential matches, ensuring that only the most promising candidates or target tables proceed to the next stage. In the second or attribute-level matching stage 220, matching attributes 228 between the source table and a selected matching table can be identified based on comparison of sample data 222 (also referred to as "sample attribute data") of the source and target tables. This second stage is dedicated to a detailed analysis of attribute- or column-level alignments. Latent relationships and patterns within the sample data are analyzed in this stage.

Note that only matching tables 218 identified in the table-level matching stage 210 are analyzed in the attribute-level matching stage 220. In other words, target tables that fail to match the source table in the first stage are excluded from the further attribute match in the second stage. Generally, the attribute-level matching involves content comparison (comparison of data within tables) and often requires more resources for data collection and embedding generation. Thus, by prioritizing the most relevant matches (e.g., matching tables) first, the framework 200 reduces computational overhead associated with exhaustive matching attributes of all tables. As a result, the framework 200 can improve the schema matching by balancing accuracy with efficiency.

In the first or table-level matching stage 210, metadata 212 of both the source and target database systems (e.g., metadata 115 and 125) can be dynamically retrieved in runtime. The metadata 212 can include schema information of the source and target tables. In some examples, the metadata 212 can also include text descriptions of the source and target tables and their attributes. In some examples, the metadata 212 can further include statistics of the source and target tables.

In some examples, a filtering process 214 can be applied to the retrieved metadata 212 to remove any metadata that is deemed sensitive, invalid, and/or non semantic. For instance, sensitive information such as personal identifiable information that could potentially violate regulations like European Union's General Data Protection Regulation (GDPR) and the California Consumer Privacy Act (CCPA) can be detected and filtered out. This could be achieved using various techniques such as natural language processing, machine learning approaches, or rule-based methods. Additionally, table or column names that lack meaningful or semantic context (e.g., a column named 'xyz' without any corresponding text descriptions, or an attribute containing binary data, etc.) can also be identified and removed. Further, invalid or irrelevant data can be detected and filtered out. For example, an attribute having an integer data type but containing alphabetic strings would be deemed invalid and thus filtered out.

The filtered metadata of the source and target tables can be used for similarity measurement 216 to identify the matching tables 218. In some examples, this comparison can be performed by first generating vector embeddings from the filtered metadata, and then calculating a similarity metric (e.g., cosine similarity) between the vector embeddings. Note that the filtering process, particularly the removal of non-semantic data, can enhance the quality of vector embeddings and the subsequent similarity measurements. In some examples, the matching tables can be selected from the target tables whose corresponding similarity measurement is above a predefined threshold. In some examples, the matching tables can be identified by ranking the target tables based on their similarity values and choosing the top N target tables, where N is a predefined number.

In some examples, the similarity measurement 216 can be performed using a generative AI model (e.g., the generative AI model 150). or instance, the filtered metadata of the source and target tables can be forwarded to the generative AI model. The generative AI model can be prompted (using specific instructions from a prompt template) to measure similarities between the source and target tables to identify matching tables 218 based on comparison of the filtered metadata of the source and target tables. The generative AI model can have an embedding layer or stack configured to perform vector embedding of input data such as the filtered metadata, and the prompt can instruct the generative AI model to calculate similarity based on such vector embeddings.

In other examples, the similarity measurement 216 can be performed without the usage of a generative AI model. For example, a vector embedding engine can be employed to generate vector embeddings of the filtered metadata using a variety of embedding algorithms (e.g., Word2Vec, GloVe, BERT, etc.). Once the vector embeddings are generated, a similarity calculator, such as one that uses cosine similarity, can then be used to calculate the similarity between the vector embeddings of the source and target tables.

The second attribute-level matching stage 220 begins with obtaining sample data 222 from both the source table and the selected matching table. Sample data 222 can be obtained by applying a specific sampling method to select rows of chosen columns of the source table and the selected matching table. In some examples, random sampling can be used, where each row has an equal likelihood of being selected. In some examples, unique value sampling can be applied, where rows with unique values for a particular column are selected. In some examples, global sampling can be be employed, where a fixed percentage of rows are selected from the entire table. Other sampling methods can also be used.

A filtering process 224 can be applied to the sample data 222 to remove any data that is considered sensitive, invalid, or non-semantic, similar to the filtering process 214 applied in the first stage. Then, another similarity measurement 226 can be performed to identify pairs of matching attributes 228 by comparing the filtered sample data from the source table with the filtered sample data from the selected matching table. These matching attributes 228, each consisting of an attribute from the source table and an attribute from the selected matching table, can be identified based on a similarity threshold or by ranking the similarity scores and then selecting the top N pairs of attributes, similar to the process in the first stage.

In some examples, the similarity measurement 226 can be performed using a generative AI model (which can be the same as or different from the generative AI model used in the first stage). Alternatively, the similarity measurement 226 can be performed by using an embedding engine followed by a similarity calculator, as described above.

### Example Overview of LLMs and Prompts

Generative AI models, foundation models, and LLMs are interconnected concepts in the field of AI. Generative AI, a broad term, encompasses AI systems that generate content such as text, images, music, or code. Unlike discriminative AI models that aim to make decisions or predictions based on input data features, generative AI models focus on creating new data points. Foundation models are a subset of these generative AI models, serving as a starting point for developing more specialized models. LLMs, a specific type of generative AI, work with language and can understand and generate human-like text. In the context of generative AI, including LLMs, a prompt serves as an input or instruction that informs the AI of the desired content, context, or task. This allows users to guide the AI to produce tailored responses, explanations, or creative content based on the provided prompt.

In any of the examples herein, an LLM can take the form of an AI model that is designed to understand and generate human language. Such models typically leverage deep learning techniques such as transformer-based architectures to process language with a very large number (e.g., billions) of parameters. Examples include the Generative Pre-trained Transformer (GPT) developed by OpenAI, Bidirectional Encoder Representations from Transforms (BERT) by Google, A Robustly Optimized BERT Pretraining Approach developed by Facebook AI, Megatron-LM of NVIDIA, or the like. Pretrained models are available from a variety of sources.

In any of the examples herein, prompts can be provided, in runtime, to LLMs to generate responses. Prompts in LLMs can be input instructions that guide model behavior. Prompts can be textual cues, questions, or statements that users provide to elicit desired responses from the LLMs. Prompts can act as primers for the model's generative process. Sources of prompts can include user-generated queries, predefined templates, or system-generated suggestions. Technically, prompts are tokenized and embedded into the model's input sequence, serving as conditioning signals for subsequent text generation. Experiment with prompt variations can be performed to manipulate output, using techniques like prefixing, temperature control, top-K sampling, chain-of-thought, etc. These prompts, sourced from diverse inputs and tailored strategies, enable users to influence LLM-generated content by shaping the underlying context and guiding the neural network's language generation. For example, prompts can include instructions and/or examples to encourage the LLMs to provide results in a desired style and/or format.

### Example Architecture of LLM

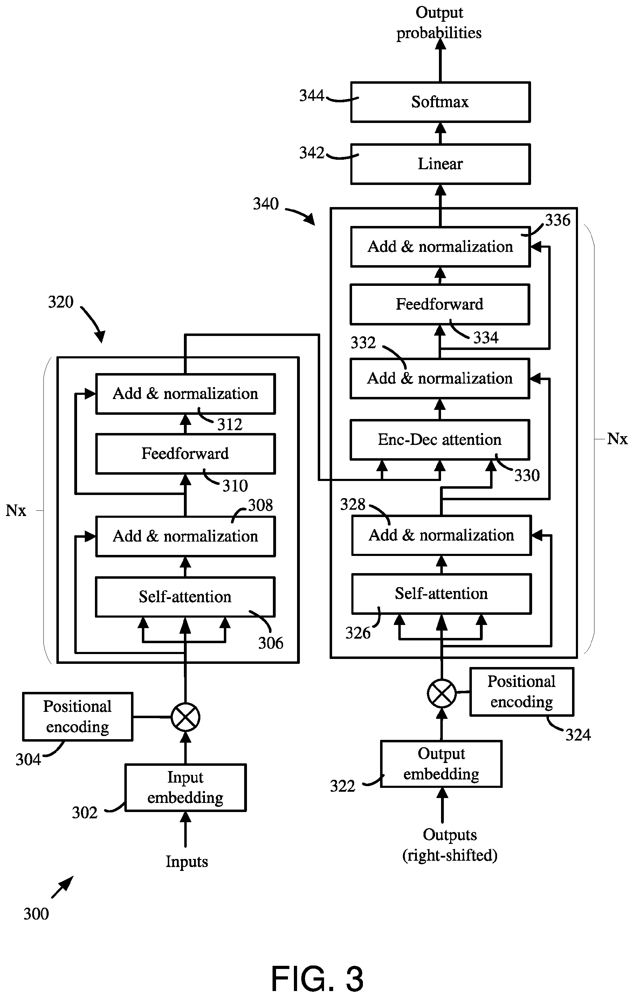

FIG. 3 shows an example architecture of an LLM 300, which can be an embodiment of the generative AI model 150 of FIG. 1.

In the depicted example, the LLM 300 uses an autoregressive model (as implemented in OpenAI's GPT) to generate text content by predicting the next word in a sequence given the previous words. The LLM 300 can be trained to maximize the likelihood of each word in the training dataset, given its context.

As shown in FIG. 3, the LLM 300 can have an encoder 320 and a decoder 340, the combination of which can be referred to as a "transformer." The encoder 320 processes input text, transforming it into a context-rich representation. The decoder 340 takes this representation and generates text output.

For autoregressive text generation, the LLM 300 generates text in order, and for each word it generates, it relies on the preceding words for context. During training, the target or output sequence, which the model is learning to generate, is presented to the decoder 340. However, the output is right shifted by one position compared to what the decoder 340 has generated so far. In other words, the model sees the context of the previous words and is tasked with predicting the next word. As a result, the LLM 300 can learn to generate text in a left-to-right manner, which is how language is typically constructed.

Text inputs to the encoder 320 can be preprocessed through an input embedding unit 302. Specifically, the input embedding unit 302 can tokenize a text input into a sequence of tokens, each of which represents a word or part of a word. Each token can then be mapped to a fixed-length vector known as an input embedding, which provides a continuous representation that captures the meaning and context of the text input. Likewise, to train the LLM 300, the targets or output sequences presented to the decoder 340 can be preprocessed through an output embedding unit 322. Like the input embedding unit 302, the output embedding unit 322 can provide a continuous representation, or output embedding, for each token in the output sequences.

Generally, the vocabulary in LLM 300 is fixed and is derived from the training data. The vocabulary in LLM 300 consists of tokens generated above during the training process. Words not in the vocabulary cannot be output. These tokens are strung together to form sentences in the text output.

In some examples, positional encodings (e.g., 304 and 324) can be performed to provide sequential order information of tokens generated by the input embedding unit 302 and output embedding unit 322, respectively. Positional encoding is needed because the transformer, unlike recurrent neural networks, process all tokens in parallel and do not inherently capture the order of tokens. Without positional encoding, the model would treat a sentence as a collection of words, losing the context provided by the order of words. Positional encoding can be performed by mapping each position/index in a sequence to a unique vector, which is then added to the corresponding vector of input embedding or output embedding. By adding positional encoding to the input embedding, the model can understand the relative positions of words in a sentence. Similarly, by adding positional encoding to the output encoding, the model can maintain the order of words when generating text output.

Each of the encoder 320 and decoder 340 can include multiple stacked or repeated layers (denoted by Nx in FIG. 3). The number of stacked layers in the encoder 320 and/or decoder 340 can vary depending on the specific LLM architecture. Generally, a higher "N" typically means a deeper model, which can capture more complex patterns and dependencies in the data but may require more computational resources for training and inference. In some examples, the number of stacked layers in the encoder 320 can be the same as the number of stacked layers in the decoder 340. In other examples, the LLM 300 can be configured so that the encoder 320 and decoder 340 can have different numbers of layers. For example, a deeper encoder (more layers) can be used to better capture the input text's complexities while a shallower decoder (fewer layers) can be used if the output generation task is less complex).

The encoder 320 and the decoder 340 are related through shared embeddings and attention mechanisms, which allow the decoder 340 to access the contextual information generated by the encoder 320, enabling the LLM 300 to generate coherent and contextually accurate responses. In other words, the output of the encoder 320 can serve as a foundation upon which the decoder network can build the generated text.

Both the encoder 320 and decoder 340 comprise multiple layers of attention and feedforward neural networks. An attention neural network can implement an "attention" mechanism by calculating the relevance or importance of different words or tokens within an input sequence to a given word or token in an output sequence, enabling the model to focus on contextually relevant information while generating text. In other words, the attention neural network plays "attention" on certain parts of a sentence that are most relevant to the task of generating text output. A feedforward neural network can process and transform the information captured by the attention mechanism, applying non-linear transformations to the contextual embeddings of tokens, enabling the model to learn complex relationships in the data and generate more contextually accurate and expressive text.

In the example depicted in FIG. 3, the encoder 320 includes an intra-attention or self-attention neural network 306 and a feedforward neural network 310, and the decoder 340 includes a self-attention neural network 326 and a feedforward neural network 334. The self-attention neural networks 306, 326 allow the LLM 300 to weigh the importance of different words or tokens within the same input sequence (self-attention in the encoder 320) and between the input and output sequences (self-attention in the decoder 340), respectively.

In addition, the decoder 340 also includes an inter-attention or encoder-decoder attention neural network 330, which receives input from the output of the encoder 320. The encoder-decoder attention neural network 330 allows the decoder 340 to focus on relevant parts of the input sequence (output of the encoder 320) while generating the output sequence. As described below, the output of the encoder 320 is a continuous representation or embedding of the input sequence. By feeding the output of the encoder 320 to the encoder-decoder attention neural network 330, the contextual information and relationships captured in the input sequence (by the encoder 320) can be carried to the decoder 340. Such connection enables the decoder 340 to access to the entire input sequence, rather than just the last hidden state. Because the decoder 340 can attend to all words in the input sequence, the input information can be aligned with the generation of output to improve contextual accuracy of the generated text output.

In some examples, one or more of the attention neural networks (e.g., 306, 326, 330) can be configured to implement a single head attention mechanism, by which the model can capture relationships between words in an input sequence by assigning attention weights to each word based on its relevance to a target word. The term "single head" indicates that there is only one set of attention weights or one mechanism for capturing relationships between words in the input sequence. In some examples, one or more of the attention neural networks (e.g., 306, 326, 330) can be configured to implement a multi-head attention mechanism, by which multiple sets of attention weights, or "heads," in parallel to capture different aspects of the input sequence. Each head learns distinct relationships and dependencies within the input sequence. These multiple attention heads can enhance the model's ability to attend to various features and patterns, enabling it to understand complex, multi-faceted contexts, thereby leading to more accurate and contextually relevant text generation. The outputs from multiple heads can be concatenated or linearly combined to produce a final attention output.

As depicted in FIG. 3, both the encoder 320 and the decoder 340 can include one or more addition and normalization layers (e.g., the layers 308 and 312 in the encoder 320, the layers 328, 332, and 336 in the decoder 340). The addition layer, also known as a residual connection, can add the output of another layer (e.g., an attention neural network or a feedforward network) to its input. After the addition operation, a normalization operation can be performed by a corresponding normalization layer, which normalizes the features (e.g., making the features to have zero mean and unit variance), This can help in stabilizing the learning process and reducing training time.

A linear layer 342 at the output end of the decoder 340 can transform the output embeddings into the original input space. Specifically, the output embeddings produced by the decoder 340 are forwarded to the linear layer 342, which can transform the high-dimensional output embeddings into a space where each dimension corresponds to a word in the vocabulary of the LLM 300.

The output of the linear layer 342 can be fed to a softmax layer 344, which is configured to implement a softmax function, also known as softargmax or normalized exponential function, which is a generalization of the logistic function that compresses values into a given range. Specifically, the softmax layer 344 takes the output from the linear layer 342 (also known as logits) and transforms them into probabilities. These probabilities sum up to 1, and each probability corresponds to the likelihood of a particular word being the next word in the sequence. Typically, the word with the highest probability can be selected as the next word in the generated text output.

Still referring to FIG. 3, the general operation process for the LLM 300 to generate a reply or text output in response to a received prompt input is described below.

First, the input text is tokenized, e.g., by the input embedding unit 302, into a sequence of tokens, each representing a word or part of a word. Each token is then mapped to a fixed-length vector or input embedding. Then, positional encoding 304 is added to the input embeddings to retain information regarding the order of words in the input text.

Next, the input embeddings are processed by the self-attention neural network 306 of the encoder 320 to generate a set of hidden states. As described above, multi-head attention mechanism can be used to focus on different parts of the input sequence. The output from the self-attention neural network 306 is added to its input (residual connection) and then normalized at the addition and normalization layer 308.

Then, the feedforward neural network 310 is applied to each token independently. The feedforward neural network 310 includes fully connected layers with non-linear activation functions, allowing the model to capture complex interactions between tokens. The output from the feedforward neural network 310 is added its input (residual connection) and then normalized at the addition and normalization layer 312.

The decoder 340 uses the hidden states from the encoder 320 and its own previous output sequence to generate the next token in an autoregressive manner so that the sequential output is generated by attending to the previously generated tokens. Specifically, the output of the encoder 320 (input embeddings processed by the encoder 320) are fed to the encoder-decoder attention neural network 330 of the decoder 340, which allows the decoder 340 to attend to all words in the input sequence. As described above, the encoder-decoder attention neural network 330 can implement a multi-head attention mechanism, e.g., computing a weighted sum of all the encoded input vectors, with the most relevant vectors being attributed the highest weights.

The previous output sequence of the decoder 340 is first tokenized by the output embedding unit 322 to generate an output embedding for each token in the output sequence. Similarly, positional embedding 324 is added to the output embedding to retain information regarding the order of words in the output sequence.

The output embeddings are processed by the self-attention neural network 326 of the decoder 340 to generate a set of hidden states. The self-attention mechanism allows each token in the text output to attend to all tokens in the input sequence as well as all previous tokens in the output sequence. The output from the self-attention neural network 326 is added to its input (residual connection) and then normalized at the addition and normalization layer 328.

The encoder-decoder attention neural network 330 receives the output embeddings processed through the self-attention neural network 326 and the addition and normalization layer 328. Additionally, the encoder-decoder attention neural network 330 also receives the output from the addition and normalization layer 312 which represents input embeddings processed by the encoder 320. By considering both processed input embeddings and output embeddings, the output of the encoder-decoder attention neural network 330 represents an output embedding which takes into account both the input sequence and the previously generated outputs. As a result, the decoder 340 can generate the output sequence that is contextually aligned with the input sequence.

The output from the encoder-decoder attention neural network 330 is added to part of its input (residual connection), i.e., the output from the addition and normalization layer 328, and then normalized at the addition and normalization layer 332. The normalized output from the addition and normalization layer 332 is then passed through the feedforward neural network 334. The output of the feedforward neural network 334 is then added to its input (residual connection) and then normalized at the addition and normalization layer 336.

The processed output embeddings output by the decoder 340 are passed through the linear layer 342, which maps the high-dimensional output embeddings back to the size of the vocabulary, that is, it transforms the output embeddings into a space where each dimension corresponds to a word in the vocabulary. The softmax layer 344 then converts output of the linear layer 342 into probabilities, each of which corresponds to the likelihood of a particular word being the next word in the sequence. Finally, the LLM 300 samples an output token from the probability distribution generated by the softmax layer 344 (e.g., selecting the token with the highest probability), and this token is added to the sequence of generated tokens for the text output.

The steps described above are repeated for each new token until an end-of-sequence token is generated or a maximum length is reached. Additionally, if the encoder 320 and/or decoder 340 have multiple stacked layers, the steps performed by the encoder 320 and decoder 340 are repeated across each layer in the encoder 320 and the decoder 340 for generation of each new token.

### Example Overall Method for Two-Stage Schema Matching

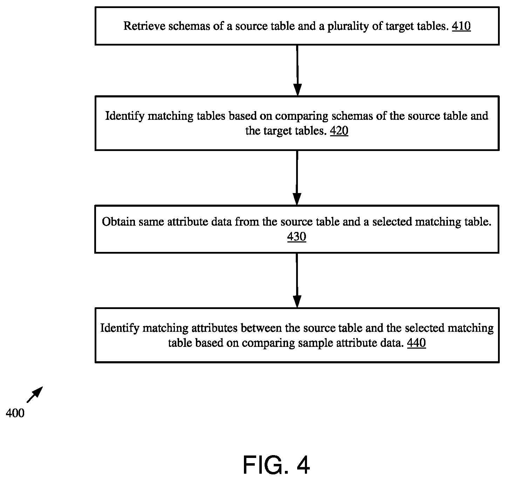

FIG. 4 is a flowchart illustrating an example overall method 400 for two-stage schema matching. The method 400 can be performed, e.g., by the computing system 100 of FIG. 1.

At step 410, the method can retrieve a schema (e.g., schema information 116) of a source table from a first database (e.g., the source database 112) and a schema (e.g., schema information 126) of a plurality of target tables from a second database (e.g., the target database 122). Retrieval of the schemas can be performed automatically and in runtime (e.g., by the schema extractor 132).

At step 420, the method can automatically identify, in runtime, one or more matching tables among the plurality of target tables based on comparison of the schema of the source table and the schema of the plurality of target tables.

In some examples, identification of the matching tables can be performed by using a generative AI model, such as the generative AI model 150 or the LLM 300 described above. For example, the method can construct a first prompt (e.g., using the prompt assembly proxy 136), in runtime, by inserting the schema of the source table and the schema of the plurality of target tables into a first prompt template, and then prompt, in runtime, the generative AI model or LLM using the first prompt.

In some examples, identifying the one or more matching tables can include generating a first vector embedding based on the schema of the source table, and generating second vector embeddings based on the schema of the plurality of target tables. In some examples, identifying the one or more matching tables can further include measuring table similarities between the first vector embedding and the second vector embeddings, and identifying table similarities that are greater than a predefined threshold. In some examples, the method can rank the one or more matching tables based on the table similarities.

At step 430, the method can obtain, in runtime, first sample attribute data from the source table and second sample attribute data from a selected matching table. Data sampling can be performed, e.g., by the sample 138. A variety of sampling methods can be used (e.g., specified by a user in the configurations 144) to obtain such sample attribute data.

Then, at step 440, the method can identify, in runtime, one or more pairs of matching attributes between the source table and the selected matching table based on comparison of the first sample attribute data and the second sample attribute data.

In some examples, identification of the matching attributes can be performed by using a generative AI model, such as the generative AI model 150 or the LLM 300 described above. For example, the method can construct a second prompt (e.g., using the prompt assembly proxy 136), in runtime, by inserting the first sample attribute data and second sample attribute data into a second prompt template, and then prompt, in runtime, the generative AI model or LLM using the second prompt.

In some examples, identification of the one or more pairs of matching attributes can include generating third vector embeddings based on the first sample attribute data and generating fourth vector embeddings based on the second sample attribute data. The method can also measure attribute similarities between the third vector embeddings and the fourth vector embeddings. In some examples, identification of the one or more pairs of matching attributes can further include identifying attribute similarities that are greater than a predefined threshold. In some examples, the method can rank the one or more pairs of matching attributes based on the attribute similarities.

The method 400 and any of the other methods described herein can be performed by computer-executable instructions (e.g., causing a computing system to perform the method) stored in one or more computer-readable media (e.g., storage or other tangible media) or stored in one or more computer-readable storage devices. Such methods can be performed in software, firmware, hardware, or combinations thereof. Such methods can be performed at least in part by a computing system (e.g., one or more computing devices).

The illustrated actions can be described from alternative perspectives while still implementing the technologies. For example, "send" can also be described as "receive" from a different perspective.

### Example Process Flow

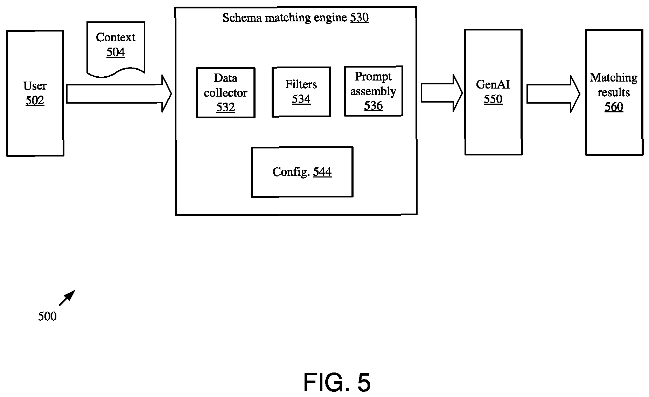

FIG. 5 is a block diagram illustrating an example process 500 which can be used in both stages of the schema matching method of FIG. 4.

FIG. 5 depicts a schema matching engine 530 which can be an example embodiment of the schema matching engine 130 of FIG. 1. As shown, the schema matching engine 530 includes a data collector 532 (similar to the schema extractor 132 or sampler 138), one or more filters 534 (similar to the filters 134), a prompt assembly proxy 536 (similar to the prompt assembly proxy 136), and configurations 544 (similar to the configurations 144).

In the first stage (table-based matching), the data collector 532 can automatically retrieve, in runtime, a schema of a source table and a schema of a plurality of target tables. As described above, the schema can include table names, attribute names, data types, primary-foreign key relationships, attribute uniqueness status, etc. The schema can also include text descriptions of tables and attributes, and/or table statistics. In the second stage (attribute-based matching), the data collector 532 can be configured to obtain sample attribute data from the source table and sample attribute data from a selected matching table. The sampling method can be specified by a user 502 in the configurations 544.

The filters 534 can be applied to the retrieved schemas (in the first stage) or the sample attribute data (in the second stage) to remove any detected sensitive, invalid, or non-semantic data. In some examples, the user 502 can specify settings and/or criteria used by the filters 534 in the configurations 544.

In the first stage, the prompt assembly proxy 536 can construct, in runtime, the first prompt by inserting the schema of the source table and the schema of the plurality of target tables (both schemas can be filtered) into a first prompt template, and then send the first prompt to a generative AI model 550. In response, the generative AI model 550 can produce matching results 560 including the identified matching tables (which can be ranked). In the second stage, the prompt assembly proxy 536 can construct, in runtime, the second prompt by inserting sample attribute data obtained from the source table and the selected matching table into a second prompt template. In some examples, the second prompt can also include the schema of the source table and the selected matching table. Alternatively, the generative AI model 550 can remember such information from the first prompt. The second prompt is then sent to the generative AI model 550. In response, the generative AI model 550 can produce matching results 560 including matching attributes (which can be ranked).

In some examples, the user 502 can provide additional task context 504, which can be inserted into the first and/or second prompt templates. Such task context 504 can include domain specific information that can assist the generative AI model 550 in better understanding the specific requirements of the schema matching task. This could include, for example, information about the specific industry or business sector the databases belong to, the types of data typically stored in such databases, or any known relationships or patterns between the tables or attributes. This additional task context 504 can help the generative AI model 550 to generate more accurate and relevant schema matches, thereby enhancing the overall effectiveness of the schema matching process.

In certain circumstances, the two-stage approach described above may be simplified to a single stage. For instance, in scenarios where both the source and target databases are small, and the sizes of the source and target tables are also small, the first stage may be skipped. In this scenario, all target tables can be assumed to be candidate matching tables. The data collector 532 can insert both schema data and sample attribute data (which can be filtered using filters 534) into a prompt template to construct a prompt. This prompt is then sent to the generative AI model 550 to directly produce matching results 560, which can include the top ranked matching tables and matching attributes.

### Example First Stage Data Processing

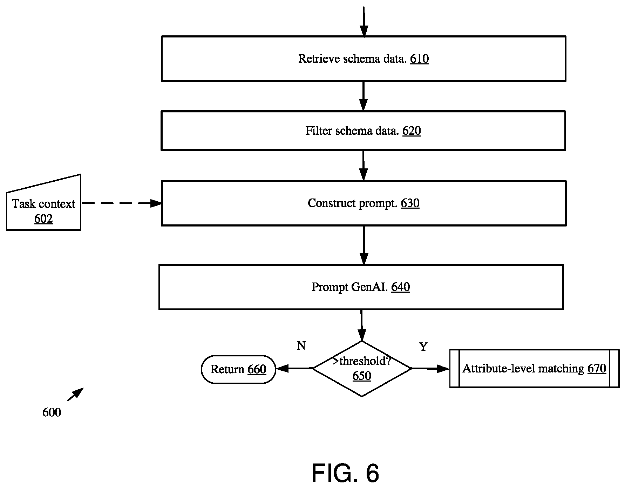

FIG. 6 is a flowchart depicting an example method 600 of implementing the first stage of schema matching.

At step 610, a schema of a source table from a source database and a schema of a plurality of target tables from a target database can be automatically retrieved in runtime (e.g., by the data collector 532 of FIG. 5 or the schema extractor 132 of FIG. 1).

In some times, retrieving the schema of the source table includes obtaining, in runtime, text descriptions of the source table and attributes of the source table from a first dictionary associated with the source database. Retrieving the schema of the plurality of target tables includes obtaining, in runtime, text descriptions of the plurality of target tables and attributes of the plurality of target tables from a second dictionary associated with the target database.

In some examples, retrieving the schema of the source table includes obtaining, in runtime, statistics of the source table. Retrieving the schema of the plurality of target tables includes obtaining, in runtime, statistics of the plurality of target tables.

At step 620, the retrieved schema data can be filtered (e.g., by the filters 534 or filters 134) to remove any detected sensitive, invalid, or non-semantic data from the schemas.

Then, the method proceeds to step 630 where a prompt can be constructed (e.g., by the prompt assembly proxy 536 or 136), e.g., by inserting the filtered schema data of the source table and the target tables into a first prompt template. Optionally, additional task context 602 including domain-specific information about the source and target databases can be provided by the user and inserted into the first prompt template.

At step 640, the constructed prompt can be sent to a generative AI model (e.g., the generative AI model 550 or 150, or the LLM 300). Upon receiving the prompt, the generative AI model can measure similarities between the source table and each of the target tables. For example, a first vector embedding can be created based on the schema of the source table. Additionally, for each target table in the plurality of target tables, a corresponding second vector embedding can be generated. These vector embeddings are based on the schema of their respective target tables, that is, each target table will have its own unique second vector embedding. In some examples, table similarities can be calculated as cosine similarities between the first vector embedding and each second vector embedding.

Then, at step 650, a condition check can be performed to determine if the calculated table similarities are above a predefined threshold.

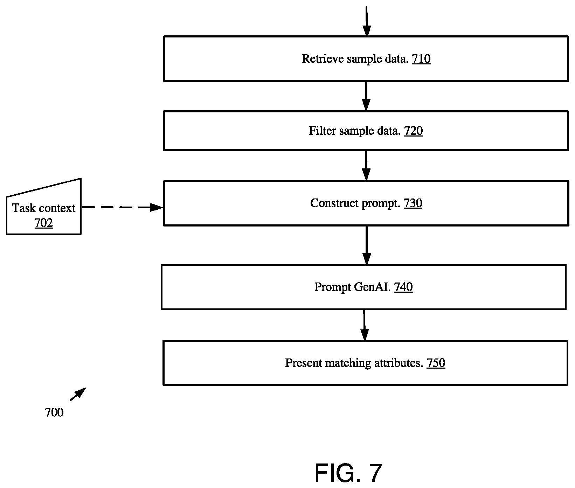

Each target table with a corresponding table similarity that is above the predefined threshold can be deemed as a matching target table (or simply "matching table"), meaning the target table and the source table are considered to have similar schemas. If one or more matching tables are identified, the method proceeds to step 670, or the second stage (as described further below with reference to method 700 depicted in FIG. 7), to perform attribute-level matching. During this stage, a more detailed comparison of the attributes of the source table and the matching target tables is performed to identify more precise matches. If no matching table is found, that is, if none of the target tables have a table similarity above the predefined threshold, the method concludes at step 660 and returns.

### Example Second Stage Data Processing

FIG. 7 is a flowchart depicting an example method 700 of implementing the second stage of schema matching.

At step 710, sample attribute data (or simply "sample data") from the source table and each matching target tables can be automatically retrieved in runtime (e.g., by the data collector 532 of FIG. 5 or the sampler 138 of FIG. 1). As described above, a variety of sampling methods (e.g., random sampling, unique value sampling, etc.) can be used to obtain the sample data.

At step 720, the retrieved sample data can be is filtered (e.g., by the filters 534 or filters 134) to remove any detected sensitive, invalid, or non-semantic data.

Then, the method proceeds to step 730 where a second prompt is constructed (e.g., by the prompt assembly proxy 536 or 136), e.g., by inserting the filtered sample data of the source table and the matching target tables into a second prompt template. Optionally, additional task context 702 including domain-specific information about the source and target databases can be provided by the user and inserted into the second prompt template.

At step 740, the constructed second prompt can be sent to a generative AI model. Upon receiving the second prompt, the generative AI model can measure similarities between the attributes of the source table and each of the matching target tables. For example, a third vector embedding can be created based on the sample attribute data of the source table. Additionally, for each matching target table, a corresponding fourth vector embedding can be generated based on its sample attribute data. Attribute similarities can be calculated as cosine similarities between the third vector embedding and each fourth vector embedding.

Then, at step 750, pairs of matching attributes between the source and target tables can be identified and presented. In some examples, a pair of matching attributes can be identified if the attribute similarity between the source and target tables exceeds a predefined threshold. In some examples, after all pairs of matching attributes are identified, they can be ranked based on their attribute similarities. This ranking provides a prioritized list of matching attributes, allowing the user to focus on the most relevant matches first.

### Example Prompt Templates

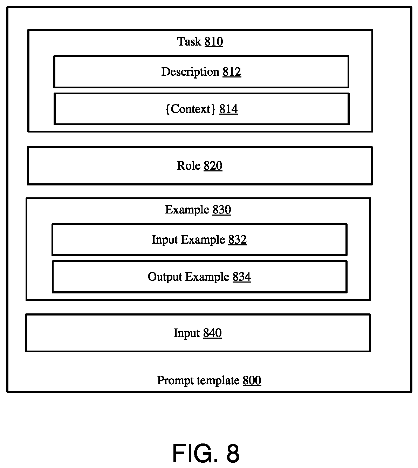

As described above, prompt templates can be used to construct prompts in both stages of schema matching. FIG. 8 depicts an example structure of a prompt template 800, which incorporates multiple categories of information or instructions for the generative AI model. Placeholders in the prompt template 800 are indicated by pairs of curly brackets. The template structure depicted in FIG. 8 can be utilized in prompt templates for both the first and second stages of schema matching.

For instance, the prompt template 800 has a Task segment 810 including a Description section 812 and a Context section 814. The Description section 812 can include details about the task, such as an introduction to the task, the definition of schema matching, and the process of obtaining matched schemas. The Context section 814, which can be optional, is a placeholder which can be replaced with user-provided domain-specific or background information that ensures the relevance of the generative AI model's results.

The prompt template 800 also has a Role segment 820 which can specify the role or function of the generative AI model within the schema matching process.

The Example segment 830 of the prompt template 800 includes Input examples 832 and Output examples 834. The Input examples 832 provide an illustration of the expected format and structure of the input data, helping the generative model understand the nature and context of the data it will be working with. This can include examples of schema information in the first stage or sample data in the second stage of schema matching. The Output examples 834 demonstrate the desired format and structure of the output data. They provide a blueprint for the generative AI model to follow when generating its own outputs, ensuring that the results are presented in a manner that is intuitive and useful to the user. This could include presenting the matching tables in descending order of similarity (in the first stage) or presenting ranked pairs of matching attributes (in the second stage).

The prompt template 800 further includes an Input segment 840, which is a placeholder which can be replaced with dynamically retrieved schemas (in the first stage) or sample data (in the second stage) of source and target tables.

An example first prompt template that can be used in the first stage table-level matching is shown below:

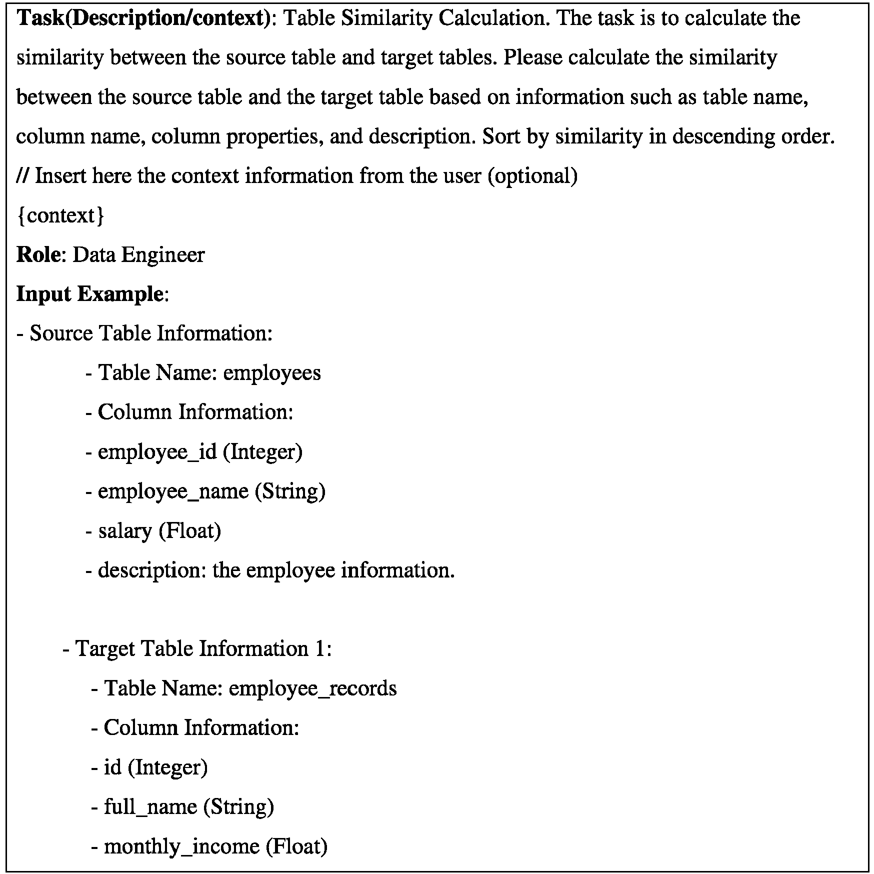

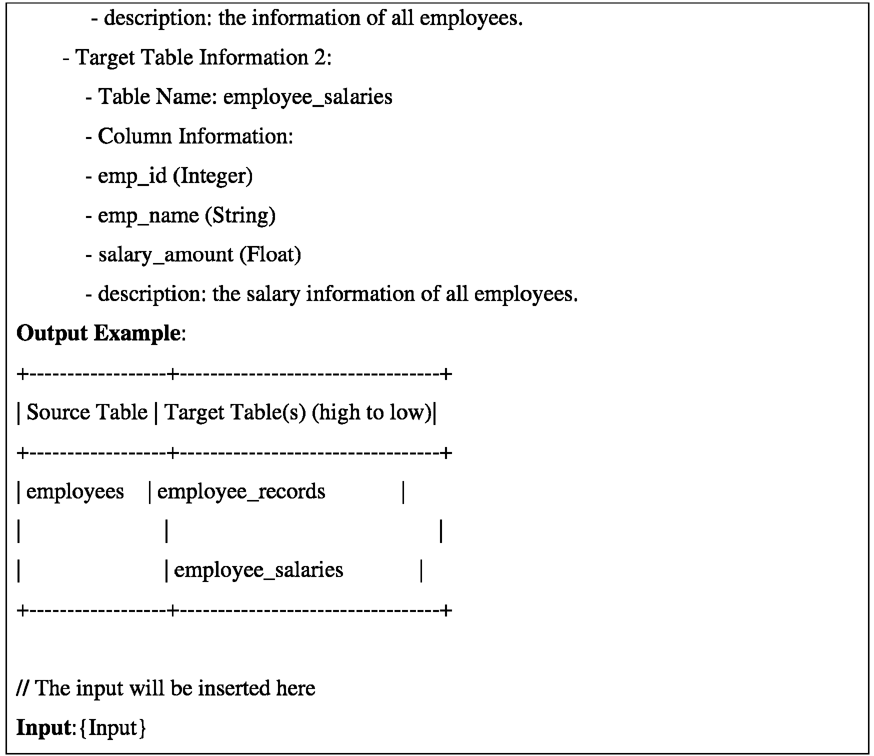

An example second prompt template that can be used in the second stage attribute-level matching is shown below:

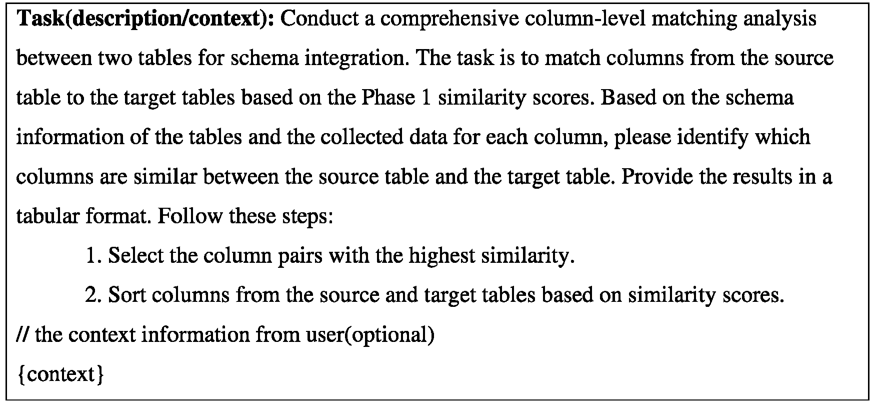

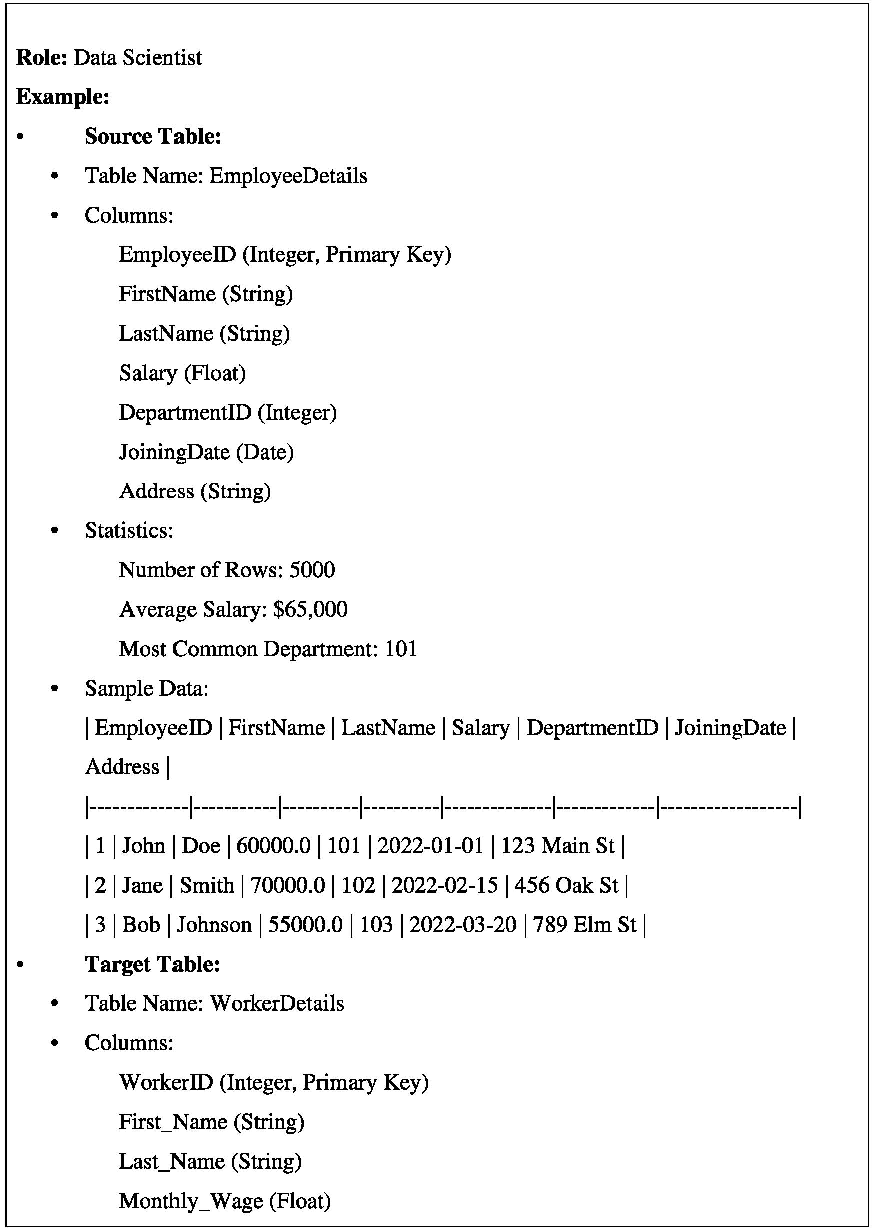

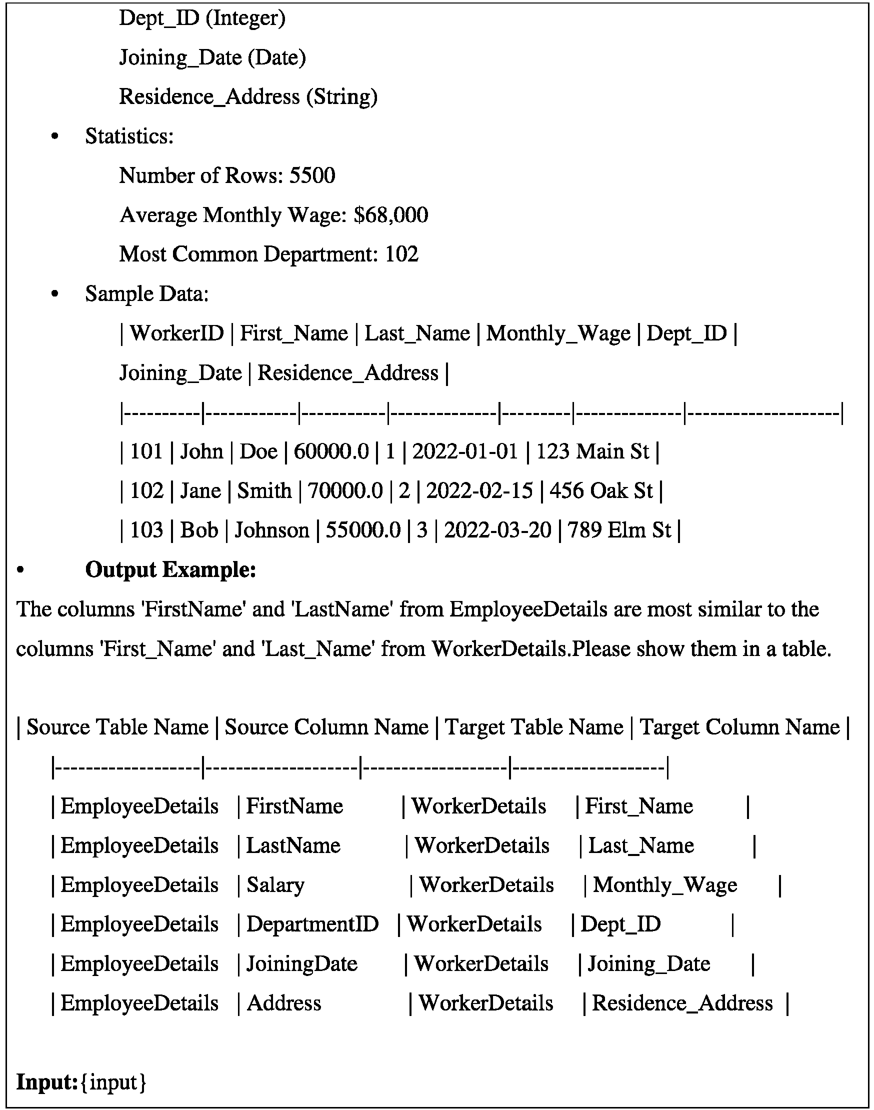

Although specific prompt templates are described above, it should be understood that these prompt templates are merely examples, and different prompt templates can be used based on the principles described herein.

### Example Use Case

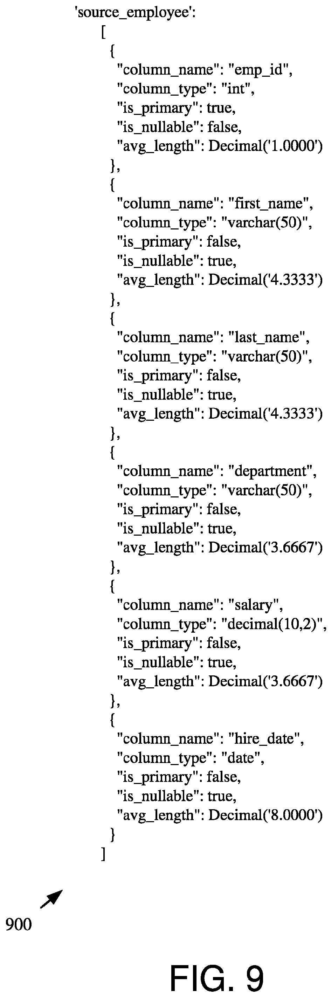

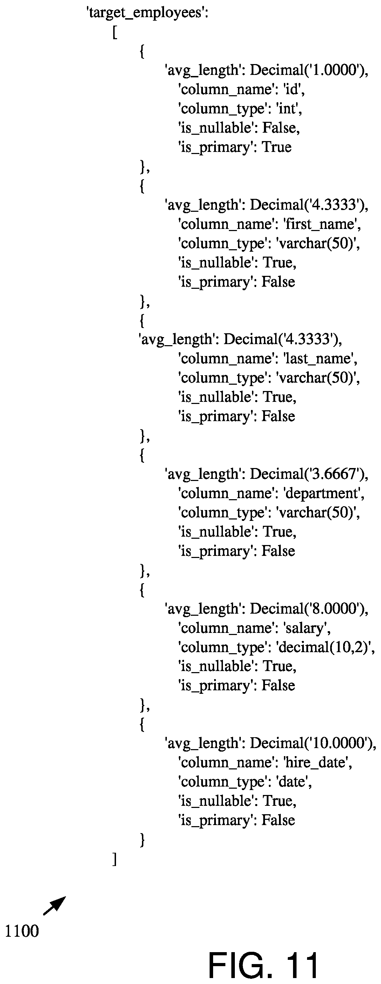

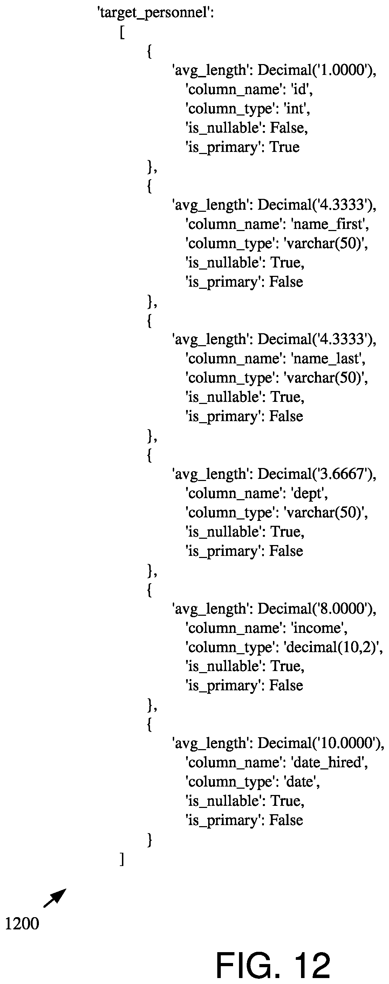

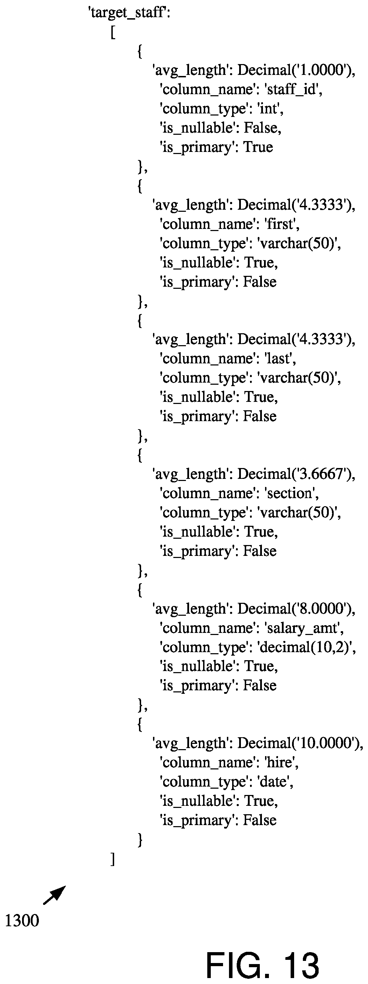

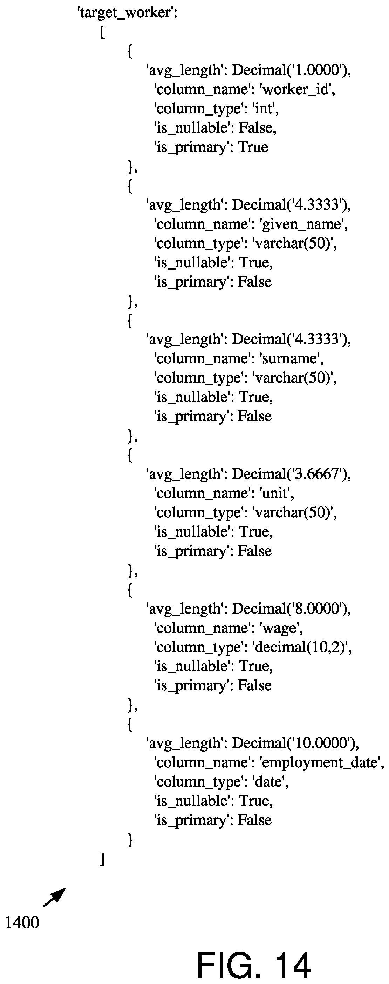

An example use case is described with reference to FIGS. 9-15 to further illustrate the two-stage schema matching approach.

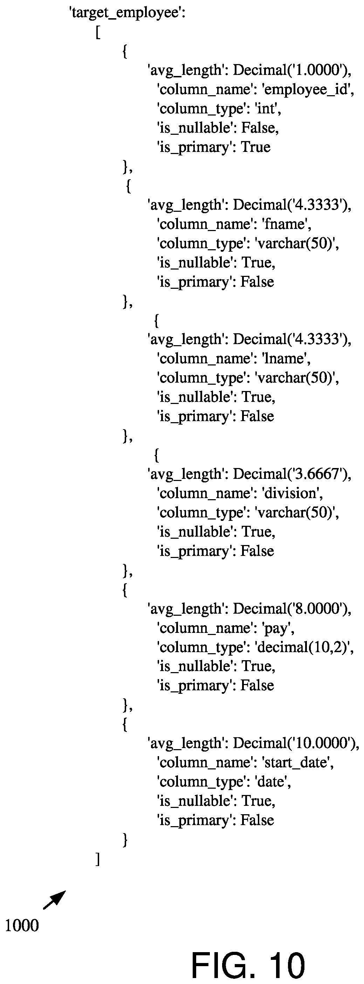

FIG. 9 shows dynamically extracted schema information 900 of an example source table named 'source_employee'. FIGS. 10-14 respectively show dynamically extracted schema information 1000, 1100, 1200, 1300, and 1400 of five different target tables, namely 'target_employee', 'target_employees', 'target_personnel', 'target_staff', and 'target_worker'. A prompt can be generated by inserting the above schema information into the Input segment of the first prompt template described above.

After receiving this prompt, the generative AI model can generate an output which identifies the following two matching tables (e.g., based on a predefined similarity threshold or the like):

| Source Table | Target Table(s) (high to low) |
|---|---|
| source_employee | target_employee |
| | target_employees |

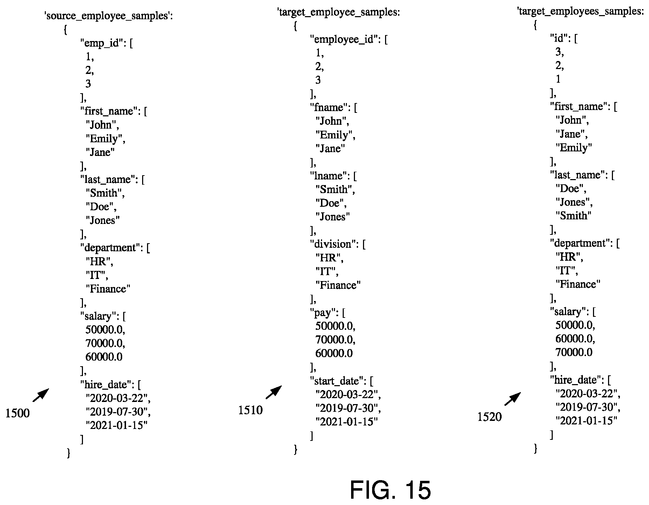

FIG. 15 shows sample data 1500, 1510, and 1520 obtained from the source table 'source_employee' and the two matching tables'target_employee', 'target_employees', respectively. Another prompt can be generated by inserting such sample data into the Input segment of the second prompt template described above.

After receiving this prompt, the generative AI model can generate an output which identifies the following matching attributes:

| Source Table Name | Source Column Name | Target Table Name | Target Column Name |
|---|---|---|---|
| source_employee | emp_id | target_employee | employee_id |
| source_employee | first_name | target_employee | fname |
| source_employee | last_name | target_employee | lname |
| source_employee | department | target_employee | division |
| source_employee | salary | target_employee | pay |
| source_employee | hire_date | target_employee | start_date |
| source_employee | emp_id | target_employees | id |
| source_employee | first_name | target_employees | first_name |
| source_employee | last_name | target_employees | last_name |
| source_employee | department | target_employees | department |
| source_employee | salary | target_employees | salary |
| source_employee | hire_date | target_employees | hire_date |

### Example Advantages

The technologies described herein offer several technical advantages.

First, the two-stage schema matching approach described herein provides a comprehensive solution to the challenges of traditional schema matching methods. By leveraging the power of generative AI, it not only addresses the syntactic features of schemas but also captures nuanced semantic differences that are often overlooked by traditional methods, thereby resulting in a more accurate alignment of schemas,

Another technical advantage of the disclosed schema matching approach is its efficiency and scalability. The first stage of table-level matching filters out irrelevant or low-similarity matches, reducing computational costs and resource consumption. This preliminary filtering allows for a more focused and efficient attribute-level matching in the second stage, making the approach scalable even for large databases with complex schemas.

The second stage of attribute-level matching further enhances the accuracy of the schema matching process. By comparing data within tables and generating embeddings for sample attribute data, the method can identify matching data columns with high precision.

Further, the dynamic nature of the two-stage schema matching approach allows it to adapt to changes in data over time. This adaptability, combined with the user-configurable options for data collection and comparison, makes the approach versatile and effective for a wide range of database applications, such as data integration, migration, interoperability, and master data management across diverse databases.

### Example Computing Systems

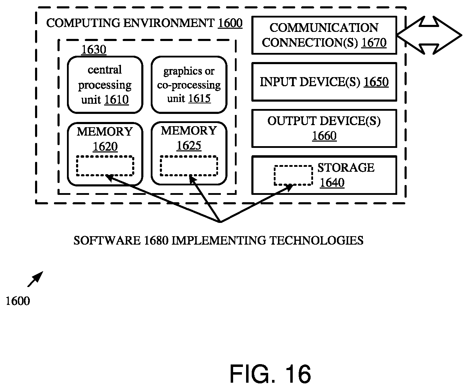

FIG. 16 depicts an example of a suitable computing system 1600 in which the described innovations can be implemented. The computing system 1600 is not intended to suggest any limitation as to scope of use or functionality of the present disclosure, as the innovations can be implemented in diverse computing systems.

With reference to FIG. 16, the computing system 1600 includes one or more processing units 1610, 1615 and memory 1620, 1625. In FIG. 16, this basic configuration 1630 is included within a dashed line. The processing units 1610, 1615 can execute computer-executable instructions, such as for implementing the features described in the examples herein (e.g., the methods 400, 600, 700). A processing unit can be a general-purpose central processing unit (CPU), processor in an application-specific integrated circuit (ASIC), or any other type of processor. In a multi-processing system, multiple processing units can execute computer-executable instructions to increase processing power. For example, FIG. 16 shows a central processing unit 1610 as well as a graphics processing unit or co-processing unit 1615. The tangible memory 1620, 1625 can be volatile memory (e.g., registers, cache, RAM), non-volatile memory (e.g., ROM, EEPROM, flash memory, etc.), or some combination of the two, accessible by the processing unit(s) 1610, 1615. The memory 1620, 1625 can store software 1680 implementing one or more innovations described herein, in the form of computer-executable instructions suitable for execution by the processing unit(s) 1610, 1615.

A computing system 1600 can have additional features. For example, the computing system 1600 can include storage 1640, one or more input devices 1650, one or more output devices 1660, and one or more communication connections 1670, including input devices, output devices, and communication connections for interacting with a user. An interconnection mechanism (not shown) such as a bus, controller, or network can interconnect the components of the computing system 1600. Typically, operating system software (not shown) can provide an operating environment for other software executing in the computing system 1600, and coordinate activities of the components of the computing system 1600.

The tangible storage 1640 can be removable or non-removable, and includes magnetic disks, magnetic tapes or cassettes, CD-ROMs, DVDs, or any other medium which can be used to store information in a non-transitory way and which can be accessed within the computing system 1600. The storage 1640 can store instructions for the software implementing one or more innovations described herein.

The input device(s) 1650 can be an input device such as a keyboard, mouse, pen, or trackball, a voice input device, a scanning device, touch device (e.g., touchpad, display, or the like) or another device that provides input to the computing system 1600. The output device(s) 1660 can be a display, printer, speaker, CD-writer, or another device that provides output from the computing system 1600.

The communication connection(s) 1670 can enable communication over a communication medium to another computing entity. The communication medium can convey information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the context of computer-executable instructions, such as those included in program modules, being executed in a computing system on a target real or virtual processor (e.g., which is ultimately executed on one or more hardware processors). Generally, program modules or components can include routines, programs, libraries, objects, classes, components, data structures, etc. that perform particular tasks or implement particular abstract data types. The functionality of the program modules can be combined or split between program modules as desired in various embodiments. Computer-executable instructions for program modules can be executed within a local or distributed computing system.

For the sake of presentation, the detailed description uses terms like "determine" and "use" to describe computer operations in a computing system. These terms are high-level descriptions for operations performed by a computer and should not be confused with acts performed by a human being. The actual computer operations corresponding to these terms vary depending on implementation.

### Computer-Readable Media

Any of the computer-readable media herein can be non-transitory (e.g., volatile memory such as DRAM or SRAM, nonvolatile memory such as magnetic storage, optical storage, or the like) and/or tangible. Any of the storing actions described herein can be implemented by storing in one or more computer-readable media (e.g., computer-readable storage media or other tangible media). Any of the things (e.g., data created and used during implementation) described as stored can be stored in one or more computer-readable media (e.g., computer-readable storage media or other tangible media). Computer-readable media can be limited to implementations not consisting of a signal.

Any of the methods described herein can be implemented by computer-executable instructions in (e.g., stored on, encoded on, or the like) one or more computer-readable media (e.g., computer-readable storage media or other tangible media) or one or more computer-readable storage devices (e.g., memory, magnetic storage, optical storage, or the like). Such instructions can cause a computing device to perform the method. The technologies described herein can be implemented in a variety of programming languages.

### Example Cloud Computing Environment

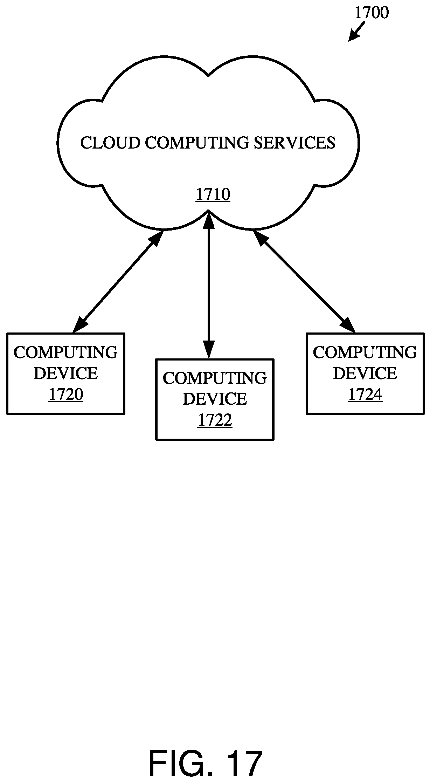

FIG. 17 depicts an example cloud computing environment 1700 in which the described technologies can be implemented, including, e.g., the system 100 and other systems herein. The cloud computing environment 1700 can include cloud computing services 1710. The cloud computing services 1710 can comprise various types of cloud computing resources, such as computer servers, data storage repositories, networking resources, etc. The cloud computing services 1710 can be centrally located (e.g., provided by a data center of a business or organization) or distributed (e.g., provided by various computing resources located at different locations, such as different data centers and/or located in different cities or countries).

The cloud computing services 1710 can be utilized by various types of computing devices (e.g., client computing devices), such as computing devices 1720, 1722, and 1724. For example, the computing devices (e.g., 1720, 1722, and 1724) can be computers (e.g., desktop or laptop computers), mobile devices (e.g., tablet computers or smart phones), or other types of computing devices. For example, the computing devices (e.g., 1720, 1722, and 1724) can utilize the cloud computing services 1710 to perform computing operations (e.g., data processing, data storage, and the like).

In practice, cloud-based, on-premises-based, or hybrid scenarios can be supported.

### Example Implementations

In any of the examples herein, a software application (or "application") can take the form of a single application or a suite of a plurality of applications, whether offered as a service (SaaS), in the cloud, on premises, on a desktop, mobile device, wearable, or the like.

Although the operations of some of the disclosed methods are described in a particular, sequential order for convenient presentation, such manner of description encompasses rearrangement, unless a particular ordering is required by specific language set forth herein. For example, operations described sequentially can in some cases be rearranged or performed concurrently.

As described in this application and in the claims, the singular forms "a," "an," and "the" include the plural forms unless the context clearly dictates otherwise. Additionally, the term "includes" means "comprises." Further, "and/or" means "and" or "or," as well as "and" and "or."

Although specific prompt templates are described above, it should be understood that these prompt templates are merely examples for illustration purposes, and different prompt templates can be used based on the principles described herein.

In any of the examples described herein, an operation performed in runtime means that the operation can be completed in real time or with negligible processing latency (e.g., the operation can be completed within one second or the like).

### Example Clauses

Any of the following example clauses can be implemented.

Clause 1. A computing system for improved schema matching of two databases, the computing system comprising: memory; one or more hardware processors coupled to the memory; and one or more computer readable storage media storing instructions that, when loaded into the memory, cause the one or more hardware processors to perform operations comprising: retrieving, in runtime, a schema of a source table from a first database and a schema of a plurality of target tables from a second database; identifying, in runtime, one or more matching tables among the plurality of target tables based on comparison of the schema of the source table and the schema of the plurality of target tables using a large language model; obtaining, in runtime, first sample attribute data from the source table and second sample attribute data from a selected matching table; and identify, in runtime, one or more pairs of matching attributes between the source table and the selected matching table based on comparison of the first sample attribute data and the second sample attribute data using the large language model.

Clause 2. The computing system of clause 1, wherein identifying the one or more matching tables comprises: constructing, in runtime, a first prompt, wherein constructing the first prompt comprises inserting the schema of the source table and the schema of the plurality of target tables into a first prompt template; and prompting, in runtime, the large language model using the first prompt.

Clause 3. The computing system of clause 2, wherein constructing the first prompt further comprises removing some attributes in the schema of the source table or the schema of the plurality of target tables from the first prompt based on one or more predefined filtering criteria.

Clause 4. The computing system of any one of clauses 1-3, wherein retrieving the schema of the source table comprises obtaining, in runtime, text descriptions of the source table and attributes of the source table from a first dictionary associated with the first database, wherein retrieving the schema of the plurality of target tables comprises obtaining, in runtime, text descriptions of the plurality of target tables and attributes of the plurality of target tables from a second dictionary associated with the second database.

Clause 5. The computing system of any one of clauses 1-4, wherein retrieving the schema of the source table comprises obtaining, in runtime, statistics of the source table, wherein retrieving the schema of the plurality of target tables comprises obtaining, in runtime, statistics of the plurality of target tables.

Clause 6. The computing system of any one of clauses 1-5, wherein identifying the one or more matching tables comprises: generating a first vector embedding based on the schema of the source table; and generating second vector embeddings based on the schema of the plurality of target tables.

Clause 7. The computing system of clause 6, wherein identifying the one or more matching tables further comprises: measuring table similarities between the first vector embedding and the second vector embeddings; and identifying table similarities that are greater than a predefined threshold.

Clause 8. The computing system of any one of clauses 1-7, wherein identify one or more pairs of matching attributes comprises: constructing, in runtime, a second prompt; and prompting, in runtime, the large language model using the second prompt, wherein constructing the second prompt comprises inserting the first sample attribute data and second sample attribute data into a second prompt template.

Clause 9. The computing system of clause 8, wherein constructing the second prompt further comprises removing some of the first sample attribute data or the second sample attribute data from the second prompt based on one or more predefined filtering criteria.

Clause 10. The computing system of any one of clauses 1-9, wherein identify one or more pairs of matching attributes comprises: generating third vector embeddings based on the first sample attribute data; generating fourth vector embeddings based on the second sample attribute data; and measuring attribute similarities between the third vector embeddings and the fourth vector embeddings.

Clause 11. A computer-implemented method for improved schema matching of two databases, the method comprising: retrieving, in runtime, a schema of a source table from a first database and a schema of a plurality of target tables from a second database; identifying, in runtime, one or more matching tables among the plurality of target tables based on comparison of the schema of the source table and the schema of the plurality of target tables using a large language model; obtaining, in runtime, first sample attribute data from the source table and second sample attribute data from a selected matching table; and identify, in runtime, one or more pairs of matching attributes between the source table and the selected matching table based on comparison of the first sample attribute data and the second sample attribute data using the large language model.

Clause 12. The computer-implemented method of clause 11, wherein identifying the one or more matching tables comprises: constructing, in runtime, a first prompt, wherein constructing the first prompt comprises inserting the schema of the source table and the schema of the plurality of target tables into a first prompt template; and prompting, in runtime, the large language model using the first prompt.

Clause 13. The computer-implemented method of any one of clauses 11-12, wherein retrieving the schema of the source table comprises obtaining, in runtime, text descriptions of the source table and attributes of the source table from a first dictionary associated with the first database, wherein retrieving the schema of the plurality of target tables comprises obtaining, in runtime, text descriptions of the plurality of target tables and attributes of the plurality of target tables from a second dictionary associated with the second database.

Clause 14. The computer-implemented method of any one of clauses 11-13, wherein retrieving the schema of the source table comprises obtaining, in runtime, statistics of the source table, wherein retrieving the schema of the plurality of target tables comprises obtaining, in runtime, statistics of the plurality of target tables.

Clause 15. The computer-implemented method of any one of clauses 11-14, wherein identifying the one or more matching tables comprises: generating a first vector embedding based on the schema of the source table; and generating second vector embeddings based on the schema of the plurality of target tables.

Clause 16. The computer-implemented method of clause 15, wherein identifying the one or more matching tables further comprises: measuring table similarities between the first vector embedding and the second vector embeddings; and ranking the one or more matching tables based on the table similarities.

Clause 17. The computer-implemented method of any one of clauses 11-16, wherein identify one or more pairs of matching attributes comprises: constructing, in runtime, a second prompt; and prompting, in runtime, the large language model using the second prompt, wherein constructing the second prompt comprises inserting the first sample attribute data and second sample attribute data into a second prompt template.

Clause 18. The computer-implemented method of any one of clauses 11-17, wherein identify one or more pairs of matching attributes comprises: generating third vector embeddings based on the first sample attribute data; and generating fourth vector embeddings based on the second sample attribute data.

Clause 19. The computer-implemented method of clause 18, wherein identify one or more pairs of matching attributes further comprises: measuring attribute similarities between the third vector embeddings and the fourth vector embeddings; and ranking the one or more pairs of matching attributes based on the attribute similarities.

Clause 20. One or more non-transitory computer-readable media having encoded thereon computer-executable instructions causing one or more processors to perform a method for improved schema matching of two databases, the method comprising: retrieving, in runtime, a schema of a source table from a first database and a schema of a plurality of target tables from a second database; identifying, in runtime, one or more matching tables among the plurality of target tables based on comparison of the schema of the source table and the schema of the plurality of target tables using a large language model; obtaining, in runtime, first sample attribute data from the source table and second sample attribute data from a selected matching table; and identify, in runtime, one or more pairs of matching attributes between the source table and the selected matching table based on comparison of the first sample attribute data and the second sample attribute data using the large language model.

### Example Alternatives

The technologies from any example can be combined with the technologies described in any one or more of the other examples. In view of the many possible embodiments to which the principles of the disclosed technology can be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system for improved schema matching of two databases, the computing system comprising:
memory;
one or more hardware processors coupled to the memory; and
one or more computer readable storage media storing instructions that, when loaded into the memory, cause the one or more hardware processors to perform operations comprising:
retrieving, in runtime, a schema of a source table from a first database and a schema of a plurality of target tables from a second database;
identifying, in runtime, one or more matching tables among the plurality of target tables based on comparison of the schema of the source table and the schema of the plurality of target tables using a large language model;
obtaining, in runtime, first sample attribute data from the source table and second sample attribute data from a selected matching table; and
identify, in runtime, one or more pairs of matching attributes between the source table and the selected matching table based on comparison of the first sample attribute data and the second sample attribute data using the large language model.

2. The computing system of claim 1, wherein identifying the one or more matching tables comprises:
constructing, in runtime, a first prompt, wherein constructing the first prompt comprises inserting the schema of the source table and the schema of the plurality of target tables into a first prompt template; and
prompting, in runtime, the large language model using the first prompt;
wherein, optionally, constructing the first prompt further comprises removing some attributes in the schema of the source table or the schema of the plurality of target tables from the first prompt based on one or more predefined filtering criteria.

3. The computing system of claim 1 or 2,
wherein retrieving the schema of the source table comprises obtaining, in runtime, text descriptions of the source table and attributes of the source table from a first dictionary associated with the first database,
wherein retrieving the schema of the plurality of target tables comprises obtaining, in runtime, text descriptions of the plurality of target tables and attributes of the plurality of target tables from a second dictionary associated with the second database; and/or
wherein retrieving the schema of the source table comprises obtaining, in runtime, statistics of the source table,
wherein retrieving the schema of the plurality of target tables comprises obtaining, in runtime, statistics of the plurality of target tables.

4. The computing system of any one of claims 1 to 3, wherein identifying the one or more matching tables comprises:
generating a first vector embedding based on the schema of the source table; and
generating second vector embeddings based on the schema of the plurality of target tables;
wherein, optionally, identifying the one or more matching tables further comprises:
measuring table similarities between the first vector embedding and the second vector embeddings; and
identifying table similarities that are greater than a predefined threshold.

5. The computing system of any one of claims 1 to 4, wherein identify one or more pairs of matching attributes comprises:
constructing, in runtime, a second prompt; and
prompting, in runtime, the large language model using the second prompt,
wherein constructing the second prompt comprises inserting the first sample attribute data and second sample attribute data into a second prompt template.

6. The computing system of claim 5, wherein constructing the second prompt further comprises removing some of the first sample attribute data or the second sample attribute data from the second prompt based on one or more predefined filtering criteria.

7. The computing system of any one of claims 1 to 6, wherein identify one or more pairs of matching attributes comprises:
generating third vector embeddings based on the first sample attribute data;
generating fourth vector embeddings based on the second sample attribute data; and
measuring attribute similarities between the third vector embeddings and the fourth vector embeddings.

8. A computer-implemented method for improved schema matching of two databases, the method comprising:
retrieving, in runtime, a schema of a source table from a first database and a schema of a plurality of target tables from a second database;
identifying, in runtime, one or more matching tables among the plurality of target tables based on comparison of the schema of the source table and the schema of the plurality of target tables using a large language model;
obtaining, in runtime, first sample attribute data from the source table and second sample attribute data from a selected matching table; and
identify, in runtime, one or more pairs of matching attributes between the source table and the selected matching table based on comparison of the first sample attribute data and the second sample attribute data using the large language model.

9. The computer-implemented method of claim 8, wherein identifying the one or more matching tables comprises:
constructing, in runtime, a first prompt, wherein constructing the first prompt comprises inserting the schema of the source table and the schema of the plurality of target tables into a first prompt template; and
prompting, in runtime, the large language model using the first prompt.

10. The computer-implemented method of claim 8 or 9,
wherein retrieving the schema of the source table comprises obtaining, in runtime, text descriptions of the source table and attributes of the source table from a first dictionary associated with the first database,
wherein retrieving the schema of the plurality of target tables comprises obtaining, in runtime, text descriptions of the plurality of target tables and attributes of the plurality of target tables from a second dictionary associated with the second database; and/or
wherein retrieving the schema of the source table comprises obtaining, in runtime, statistics of the source table,
wherein retrieving the schema of the plurality of target tables comprises obtaining, in runtime, statistics of the plurality of target tables.

11. The computer-implemented method of any one of claims 8 to 10, wherein identifying the one or more matching tables comprises:
generating a first vector embedding based on the schema of the source table; and
generating second vector embeddings based on the schema of the plurality of target tables;
wherein, optionally, identifying the one or more matching tables further comprises:
measuring table similarities between the first vector embedding and the second vector embeddings; and
ranking the one or more matching tables based on the table similarities.

12. The computer-implemented method of any one of claims 8 to 11, wherein identify one or more pairs of matching attributes comprises:
constructing, in runtime, a second prompt; and
prompting, in runtime, the large language model using the second prompt,
wherein constructing the second prompt comprises inserting the first sample attribute data and second sample attribute data into a second prompt template.

13. The computer-implemented method of any one of claims 8 to 12, wherein identify one or more pairs of matching attributes comprises:
generating third vector embeddings based on the first sample attribute data; and
generating fourth vector embeddings based on the second sample attribute data.

14. The computer-implemented method of claim 13, wherein identify one or more pairs of matching attributes further comprises:
measuring attribute similarities between the third vector embeddings and the fourth vector embeddings; and
ranking the one or more pairs of matching attributes based on the attribute similarities.

15. One or more non-transitory computer-readable media having encoded thereon computer-executable instructions causing one or more processors to perform a method for improved schema matching of two databases, the method comprising:
retrieving, in runtime, a schema of a source table from a first database and a schema of a plurality of target tables from a second database;
identifying, in runtime, one or more matching tables among the plurality of target tables based on comparison of the schema of the source table and the schema of the plurality of target tables using a large language model;
obtaining, in runtime, first sample attribute data from the source table and second sample attribute data from a selected matching table; and
identify, in runtime, one or more pairs of matching attributes between the source table and the selected matching table based on comparison of the first sample attribute data and the second sample attribute data using the large language model.
